# EUROPÄISCHE PATENTSCHRIFT

(11) **EP 3 969 335 B1**
(45) Veröffentlichungstag und Bekanntmachung des Hinweises auf die Patenterteilung: **01.05.2024**
(21) Anmeldenummer: 20726053.0
(22) Anmeldetag: 12.05.2020
(51) Int. Cl.: B60T 11/26, B60T 7/04, B60T 8/36, B60T 8/40, B60T 13/74, B60T 13/14

(54) **BREMSANLAGE FÜR EIN KRAFTFAHRZEUG**
BRAKE SYSTEM FOR A MOTOR VEHICLE
SYSTÈME DE FREINAGE POUR UN VÉHICULE AUTOMOBILE

(30) Priorität: 16.05.2019 DE 102019207088
(43) Veröffentlichungstag der Anmeldung: 23.03.2022
(73) Patentinhaber: Continental Automotive Technologies GmbH, 30175 Hannover (DE)
(72) Erfinder: DINKEL, Dieter, 60488 Frankfurt am Main (DE)
(74) Vertreter: Continental Corporation
(86) Internationale Anmeldenummer: PCT/EP2020/063215
(87) Internationale Veröffentlichungsnummer: WO 2020/229482

(56) Entgegenhaltungen:
- EP-A1- 2 641 797
- EP-A1- 2 641 799
- DE-A1-102014 225 958
- DE-A1-102017 219 598
- DE-A1-102017 222 450

## Beschreibung

Die Erfindung betrifft eine Bremsanlage gemäß dem Oberbegriff von Anspruch 1. Aus der DE 10 2012 205 860 A1 ist eine "Brake-by-wire"-Bremsanlage für Kraftfahrzeuge bekannt, welche einen bremspedalbetätigbaren Hauptbremszylinder mit nachgeschaltete Trennventilen, eine mit dem Hauptbremszylinder hydraulisch verbundene Simulationseinrichtung, eine erste elektrisch steuerbare Druckbereitstellungseinrichtung, welche durch eine Zylinder-Kolben-Anordnung mit einem hydraulischen Druckraum gebildet wird, eine zweite elektrisch steuerbare Druckbereitstellungseinrichtung in Form zweier Pumpen und eine Druckmodulationseinheit zum Einstellen radindividueller Bremsdrücke, die pro Radbremse ein Einlassventil und ein Auslassventil aufweist, umfasst. Dabei sind der Hauptbremszylinder, die nachgeschalteten Trennventile, die Simulationseinrichtung und die erste Druckbereitstellungseinrichtung in einem von einer ersten Elektronikeinheit kontrollierten Kreisdruckbereitstellungsmodul sowie die zweite Druckbereitstellungseinheit und die Druckmodulationseinheit in einem von einer zweiten Elektronikeinheit kontrollierten Raddruckbereitstellungsmodul zusammengefasst. Hauptbremszylinder und erste Druckbereitstellungseinrichtung sind gemeinsam in dem Kreisdruckbereitstellungsmodul angeordnet, an welchem ein unter Atmosphärendruck stehender Druckmittelvorratsbehälter angeordnet ist, damit Hauptbremszylinder sowie erste Druckbereitstellungseinrichtung möglichst direkt mit Druckmittel versorgt werden können.

Das Dokument EP 2 641 797 A1 offenbart eine Bremsanlage nach dem Oberbegriff von Anspruch 1.

Das Dokument EP 2 641 799 A1 offenbart einen elektrischen Bremsaktuator mit einem Hauptreservoir und ein Fahrzeugbremssystem.

Das Dokument DE 10 2014 225 958 A1 offenbart eine Bremsanlage für ein Kraftfahrzeug zur Betätigung von hydraulisch betätigbaren Radbremsen.

Das Dokument DE 10 2017 222 450 A1 offenbart eine Bremsanlage für ein Kraftfahrzeug mit hydraulisch betätigbaren Radbremsen, welche Rädern einer ersten und zweiten Fahrzeugachse zugeordnet sind.

Das Dokument DE 10 2017 219 598 A1 offenbart eine Bremsanlage für ein Kraftfahrzeug mit zumindest vier hydraulisch betätigbaren Radbremsen für Räder, die auf eine erste Fahrzeugachse und eine zweite Fahrzeugachse verteilt sind.

Es ist Aufgabe der vorliegenden Erfindung, eine verbesserte Bremsanlage bereitzustellen, welche für das hochautomatisierte Fahren geeignet ist und flexibel im Kraftfahrzeug angeordnet werden kann.

Diese Aufgabe wird erfindungsgemäß durch eine Bremsanlage gemäß Anspruch 1 gelöst.

Der Erfindung liegt der Gedanke zugrunde, bei einer Bremsanlage mit einem bremspedalbetätigbaren Hauptbremszylinder, einer mit dem Hauptbremszylinder wirkverbundenen Simulationseinrichtung, einer ersten elektrisch steuerbaren Druckbereitstellungseinrichtung, einem unter Atmosphärendruck stehenden Druckmittelvorratsbehälter, einem ersten Bremskreis mit einem ersten Bremskreisdruckleitungsabschnitt zur Verbindung mit ersten Radbremsen und einem zweiten Bremskreis mit einem zweiten Bremskreisdruckleitungsabschnitt zur Verbindung mit zweiten Radbremsen, wobei der Hauptbremszylinder mit dem ersten und dem zweiten Bremskreisdruckleitungsabschnitt verbunden ist und die ersten Druckbereitstellungseinrichtung mit dem ersten und dem zweiten Bremskreisdruckleitungsabschnitt verbunden ist, einem Einlass- und einem Auslassventil je Radbremse, einem Niederdruckspeicherje Bremskreis, welcher mit den Ausgangsanschlüssen der dem Bremskreis zugeordneten Auslassventile verbunden ist, einer zweiten elektrisch steuerbaren Druckbereitstellungseinrichtung mit einer Pumpe je Bremskreis, deren Saugseite mit dem Bremskreisdruckleitungsabschnitt sowie dem Niederdruckspeicher des Bremskreises und deren Druckseite mit den Einlassventilen der dem Bremskreis zugeordneten Radbremsen verbunden ist, wobei die Eingangsanschlüsse der Einlassventile der ersten Radbremsen mit dem ersten Bremskreisdruckleitungsabschnitt verbunden sind und die Eingangsanschlüsse der Einlassventile der zweiten Radbremsen mit dem zweiten Bremskreisdruckleitungsabschnitt verbunden sind, wobei die Einlass- und Auslassventile, die Niederdruckspeicher und die zweite Druckbereitstellungseinrichtung in einem zweiten eigenständigen Modul angeordnet sind, die erste elektrisch steuerbare Druckbereitstellungseinrichtung in einem ersten eigenständigen Modul anzuordnen und den Hauptbremszylinder und die Simulationseinrichtung in einem dritten eigenständigen Modul anzuordnen, wobei der Druckmittelvorratsbehälter an dem ersten Modul angeordnet ist. Diese Anordnung in drei Modulen erlaubt eine flexiblere Anordnung der Bremsanlage im Fahrzeug. Weiterhin bietet die Erfindung den Vorteil, dass das an der Spritzwand anzubringende dritte Modul mit lediglich den für eine Bremsbetätigung durch den Fahrzeugführer/Fahrer notwendigen Komponenten, d.h. dem Hauptbremszylinder und der Simulationseinrichtung, von geringer Baugröße ist.

Erfindungsgemäß ist an dem dritten Modul kein Druckmittelvorratsbehälter angeordnet. Dies bietet den Vorteil, dass das an der Spritzwand anzubringende dritte Modul eine noch geringere Baugröße besitzt.

Gemäß einer alternativen, nicht unter Anspruch 1 fallenden Ausführungsform der Bremsanlage ist an dem dritten Modul mit dem Hauptbremszylinder ein zweiter Druckmittelvorratsbehälter angeordnet. Dies bietet den Vorteil, dass die Versorgung des Hauptbremszylinders mit Druckmittel über eine kurze hydraulische Leitung mit geringem Strömungswiderstand erfolgt. Eine lange hydraulische Leitung von dem dritten Modul mit dem Hauptbremszylinder zu dem Druckmittelvorratsbehälter, der an dem ersten Modul angeordnet ist, kann außerdem entfallen.

Gemäß einer alternativen, nicht unter Anspruch 1 fallenden Ausführungsform sind der Druckmittelvorratsbehälter des ersten Moduls und der zweite Druckmittelvorratsbehälter des dritten Moduls mit einem dritten Druckmittelvorratsbehälter verbunden. Der dritte Druckmittelvorratsbehälter kann an einer anderen Stelle im Fahrzeug angebracht werden und dient zur Bereithaltung von zusätzlichem Druckmittel für sowohl den Druckmittelvorratsbehälter des ersten Moduls wie auch den zweite Druckmittelvorratsbehälter des dritten Moduls. Der Druckmittelvorratsbehälter des ersten Moduls und der zweite Druckmittelvorratsbehälter des dritten Moduls können so kleiner dimensioniert werden. Dies bietet den Vorteil, dass trotz zweitem Druckmittelvorratsbehälter an dem dritten Modul dennoch das an der Spritzwand anzubringende dritte Modul eine geringe Baugröße besitzt.

Gemäß einer bevorzugten Ausführungsform der Bremsanlage umfasst die Bremsanlage neben dem Druckmittelvorratsbehälter an dem ersten Modul keinen weiteren Druckmittelvorratsbehälter. Dies bietet den Vorteil, dass das an der Spritzwand anzubringende dritte Modul eine noch geringere Baugröße besitzt.

Es hat sich als möglich erwiesen, den zur Versorgung des Hauptbremszylinders mit Druckmittel notwendigen Druckmittelvorratsbehälter an dem ersten Modul anzuordnen. Dies bietet den Vorteil, dass das an der Spritzwand anzubringende dritte Modul eine noch geringere Baugröße besitzt.

Bevorzugt ist eine hydraulische Leitung von dem dritten Modul zu dem Druckmittelvorratsbehälter an dem ersten Modul vorgesehen, über welche Hauptbremszylinder mit Druckmittel versorgt wird.

Gemäß einer bevorzugten Ausführungsform der Bremsanlage umfasst das erste Modul sowie das zweite Modul jeweils eine eigene elektronische Steuer- und Regeleinheit. Hierdurch ist vorteilhafterweise eine unabhängige Ansteuerung der ersten und zweiten elektrisch steuerbaren Druckbereitstellungseinrichtungen gewährleistet.

Gemäß einer bevorzugten Ausführungsform der Bremsanlage umfasst das dritte Modul ebenfalls eine eigene elektronische Steuer- und Regeleinheit. Diese ist besonders bevorzugt zur Ansteuerung eines in dem dritten Modul angeordneten Simulatorventils und/oder zur Verbindung mit einem dem Hauptbremszylinder zugeordneten Sensor, insbesondere einem Wegsensor zur Erfassung einer Verschiebung oder Position eines Kolbens des Hauptbremszylinders, ausgebildet.

Bevorzugt sind das erste Modul und das zweite Modul über die Bremskreisdruckleitungsabschnitte hydraulisch miteinander verbunden.

Die mit dem Hauptbremszylinder wirkverbundene Simulationseinrichtung vermittelt dem Fahrer z.B. in einer Brake-by-wire Betriebsart ein Bremspedalgefühl.

Bevorzugt ist für zumindest einen der Bremskreisdruckleitungsabschnitte eine hydraulische Verbindung zwischen dem Bremskreisdruckleitungsabschnitt und dem Druckmittelvorratsbehälter vorzusehen, in welcher ein elektrisch betätigbares Ablassventil angeordnet ist. Dies bietet den Vorteil, dass in bestimmten Situationen der Bremsanlage Druckmittel nicht nur in die Niederdruckspeicher abgelassen werden kann, sondern auch in den Druckmittelvorratsbehälter. Durch Öffnen des zumindest einen Ablassventils kann überschüssiges Druckmittelvolumen, welches z.B. zuvor von den Pumpen aus dem Druckmittelvorratsbehälter angesaugt wurde, einfach in den Druckmittelvorratsbehälter abgelassen werden. Weiterhin kann die Saugseite der Pumpe einfach drucklos (d.h. auf Atmosphärendruck) gehalten werden. Die Bremsanlage ist so für das hochautomatisierte Fahren besonders geeignet.

Bevorzugt ist für den anderen Bremskreisdruckleitungsabschnitt eine zweite hydraulische Verbindung zwischen diesem Bremskreisdruckleitungsabschnitt und dem Druckmittelvorratsbehälter vorgesehen, in welcher ein in Richtung dieses Bremskreisdruckleitungsabschnitts öffnendes Rückschlagventil angeordnet ist. Besonders bevorzugt werden die erste und die zweite hydraulische Verbindung nicht durch einen zumindest teilweise gemeinsamen Leitungsabschnitt gebildet, sind in diesem Sinne also unabhängig voneinander. Diese zweite hydraulische Verbindung mit dem Rückschlagventil erlaubt ein direktes und damit schnelles Nachsaugen von Druckmittel aus dem Druckmittelvorratsbehälter.

Bevorzugt ist für den anderen Bremskreisdruckleitungsabschnitt ebenfalls eine hydraulische Verbindung (zweite hydraulische Verbindung) zwischen dem Bremskreisdruckleitungsabschnitt und dem Druckmittelvorratsbehälter vorgesehen, in welcher ein elektrisch betätigbares Ablassventil (zweites Ablassventil) angeordnet ist. Besonders bevorzugt werden die erste und die zweite hydraulische Verbindung nicht durch einen zumindest teilweise gemeinsamen Leitungsabschnitt gebildet, sind in diesem Sinne also unabhängig voneinander. Die zweite hydraulische Verbindung mit dem zweiten Ablassventil erlaubt ein getrenntes direktes Ablassen von Druckmittel oder Drucklosschalten für den ersten und den zweiten Bremskreisdruckleitungsabschnitt.

Das Ablassventil ist oder die Ablassventile sind bevorzugt stromlos geschlossen ausgeführt, um in einer hydraulischen Rückfallbetriebsart der Bremsanlage, z.B. bei einem Ausfall der elektrischen Energieversorgung der Bremsanlage, einen Druckaufbau in den Bremskreisdruckleitungsabschnitten (und damit den Radbremsen) durch den Fahrer mittels des Hauptbremszylinders zu ermöglichen.

Bevorzugt sind das erste Modul und das zweite Modul über die Bremskreisdruckleitungsabschnitte hydraulisch miteinander verbunden. Das Ablassventil ist oder die Ablassventile sind dabei in dem ersten Modul angeordnet.

Gemäß einer Weiterbildung der Erfindung ist in der hydraulischen Verbindung zwischen dem Bremskreisdruckleitungsabschnitt und dem Druckmittelvorratsbehälter mit dem Ablassventil neben dem Ablassventil kein weiteres Ventil angeordnet. Besonders bevorzugt ist in den hydraulischen Verbindungen (je zwischen Bremskreisdruckleitungsabschnitt und Druckmittelvorratsbehälter) mit Ablassventil neben dem Ablassventil kein weiteres Ventil angeordnet. Hierdurch wird der Strömungswiderstand der hydraulischen Verbindung verringert und das Drucklosschalten des Bremskreisdruckleitungsabschnittes wird beschleunigt.

Bevorzugt ist die erste Druckbereitstellungseinrichtung als eine Zylinder-Kolben-Anordnung mit einem hydraulischen Druckraum ausgebildet, deren Kolben durch einen elektromechanischen Aktuator vorschiebbar und zurückziehbar ist, wobei die erste Druckbereitstellungseinrichtung derart ausgeführt ist, dass die erste Druckbereitstellungseinrichtung maximal einen Blockierdruck der Radbremsen bereitstellen kann. Besonders bevorzugt ist die Größe des Druckraums der Druckbereitstellungseinrichtung, und damit das maximal fassbare Druckmittelvolumen, derart ausgeführt, dass die erste Druckbereitstellungseinrichtung maximal einen Blockierdruck der Radbremsen bereitstellen kann. So kann der Bauraum des ersten Moduls reduziert werden.

Gemäß einer bevorzugten Ausführungsform der erfindungsgemäßen Bremsanlage ist die erste Druckbereitstellungseinrichtung über ein erstes elektrisch betätigbares Zuschaltventil mit dem ersten Bremskreisdruckleitungsabschnitt und über ein zweites elektrisch betätigbares Zuschaltventil mit dem zweiten Bremskreisdruckleitungsabschnitt verbunden, und der Hauptbremszylinder über ein erstes elektrisch betätigbares Trennventil mit dem ersten Bremskreisdruckleitungsabschnitt und über ein zweites elektrisch betätigbares Trennventil mit dem zweiten Bremskreisdruckleitungsabschnitt verbunden.

Besonders bevorzugt sind das erste und zweite Zuschaltventil und das erste und zweite Trennventil in dem ersten eigenständigen Modul angeordnet.

Besonders bevorzugt umfasst der Hauptbremszylinder zwei Druckräume, die durch einen Schwimmkolben voneinander getrennt sind, wobei der erste Druckraum über das erste elektrisch betätigbare Trennventil mit dem ersten Bremskreisdruckleitungsabschnitt und der zweite Druckraum über das zweite elektrisch betätigbare Trennventil mit dem zweiten Bremskreisdruckleitungsabschnitt verbunden ist.

Die Zweikreisigkeit bietet den Vorteil einer höheren Verfügbarkeit der Bremsanlage im Falle einer Leckage. Durch die Zuschaltventile und Trennventile kann bei einer Leckage der betroffene Bereich / die betroffene hydraulische Komponente abgetrennt werden und die übrige Bremsanlage ist weiterhin zum Druckaufbau und einer teilweisen Betätigung von Radbremsen befähigt.

Gemäß einer anderen bevorzugten Ausführungsform der erfindungsgemäßen Bremsanlage ist die erste Druckbereitstellungseinrichtung über ein elektrisch betätigbares Zuschaltventil mit dem zweiten Bremskreisdruckleitungsabschnitt verbunden, der Hauptbremszylinder ist über ein elektrisch betätigbares Trennventil mit dem ersten Bremskreisdruckleitungsabschnitt verbunden, und der erste Bremskreisdruckleitungsabschnitt ist über ein elektrisch betätigbares Achstrennventil mit dem zweiten Bremskreisdruckleitungsabschnitt verbunden.

Besonders bevorzugt sind das Zuschaltventil, das Trennventil und das Achstrennventil in dem ersten eigenständigen Modul angeordnet.

Besonders bevorzugt ist in der hydraulischen Verbindung zwischen der ersten Druckbereitstellungseinrichtung und dem zweiten Bremskreisdruckleitungsabschnitt ausschließlich das elektrisch betätigbare Zuschaltventil vorgesehen (kein anders elektrisch betätigbares Ventil).

Besonders bevorzugt ist in der hydraulischen Verbindung zwischen dem Hauptbremszylinder und dem ersten Bremskreisdruckleitungsabschnitt ausschließlich das elektrisch betätigbare Trennventil vorgesehen (kein anders elektrisch betätigbares Ventil).

In der hydraulischen Verbindung zwischen dem ersten und dem zweiten Bremskreisdruckleitungsabschnitt ist besonders bevorzugt ausschließlich das elektrisch betätigbare Achstrennventil angeordnet (kein anders elektrisch betätigbares Ventil).

Besonders bevorzugt ist der Hauptbremszylinder einkreisig ausgeführt, dessen einziger Druckraum über das elektrisch betätigbare Trennventil mit dem ersten Bremskreisdruckleitungsabschnitt verbunden ist. Dies ermöglicht eine kostengünstigere Bremsanlage.

Bevorzugt sind je Bremskreis die Einlassventile über ein analog regelbares, stromlos offenes Ventil mit dem Bremskreisdruckleitungsabschnitt verbunden. Dieses Ventil ermöglicht z.B. ein Abtrennen des Bremskreisdruckleitungsabschnitts von den Radbremsen, z.B. im Falle eines Druckaufbaus mittels der Pumpe. Besonders bevorzugt ist dem stromlos offenen Ventil ein in Strömungsrichtung zu den Einlassventilen öffnendes Rückschlagventil parallelgeschaltet. Besonders bevorzugt sind die analog regelbaren, stromlos offenen Ventile in dem zweiten eigenständigen Modul angeordnet.

Bevorzugt ist je Bremskreis die Saugseite der Pumpe über ein elektrisch betätigbares Druckmittelzufuhrventil mit dem Bremskreisdruckleitungsabschnitt verbunden. Dieses Druckmittelzufuhrventil ermöglicht wahlweise das Ansaugen von Druckmittel durch die Pumpe aus dem Niederdruckspeicher oder dem Bremskreisdruckleitungsabschnitt. Dabei kann der Bremskreisdruckleitungsabschnitt über ein Ablassventil mit dem Druckmittelvorratsbehälter verbunden sein. Besonders bevorzugt sind die Druckmittelzufuhrventile in dem zweiten eigenständigen Modul angeordnet.

Die zweite Druckbereitstellungseinrichtung wird bevorzugt durch zwei mittels eines Elektromotors gemeinsam angetriebene Pumpen gebildet.

Bevorzugt handelt es sich um eine Bremsanlage, die in einer "Brake-by-wire"-Betriebsart sowohl vom Fahrzeugführer als auch unabhängig vom Fahrzeugführer ansteuerbar ist, normalerweise in der "Brake-by-wire"-Betriebsart betrieben wird und in einer Rückfallbetriebsart betrieben werden kann.

Bevorzugt sind zumindest das erste und das zweite eigenständige Modul jeweils als eine elektrohydraulische Steuer- und Regeleinheit (HECU: Hydraulic Control Unit) mit einem Ventilblock (HCU: Hydraulic Control Unit) und einer elektronischen Steuer- und Regeleinheit (ECU: Electronic Control Unit) ausgebildet. Bevorzugt ist auch das dritte eigenständige Modul als eine elektrohydraulische Steuer- und Regeleinheit (HECU: Hydraulic Control Unit) mit einem Ventilblock (HCU: Hydraulic Control Unit) und einer elektronischen Steuer- und Regeleinheit (ECU: Electronic Control Unit) ausgebildet.

Weitere bevorzugte Ausführungsformen der Erfindung ergeben sich aus den Ansprüchen und der nachfolgenden Beschreibung anhand von Figuren.

Es zeigen schematisch:
- Fig. 1: eine Ausführung einer Bremsanlage,
- Fig. 2: ein erstes Ausführungsbeispiel einer erfindungsgemäßen Bremsanlage,
- Fig. 3: ein weiteres Ausführungsbeispiel einer erfindungsgemäßen Bremsanlage, und
- Fig.4: ein weiteres Ausführungsbeispiel einer erfindungsgemäßen Bremsanlage.

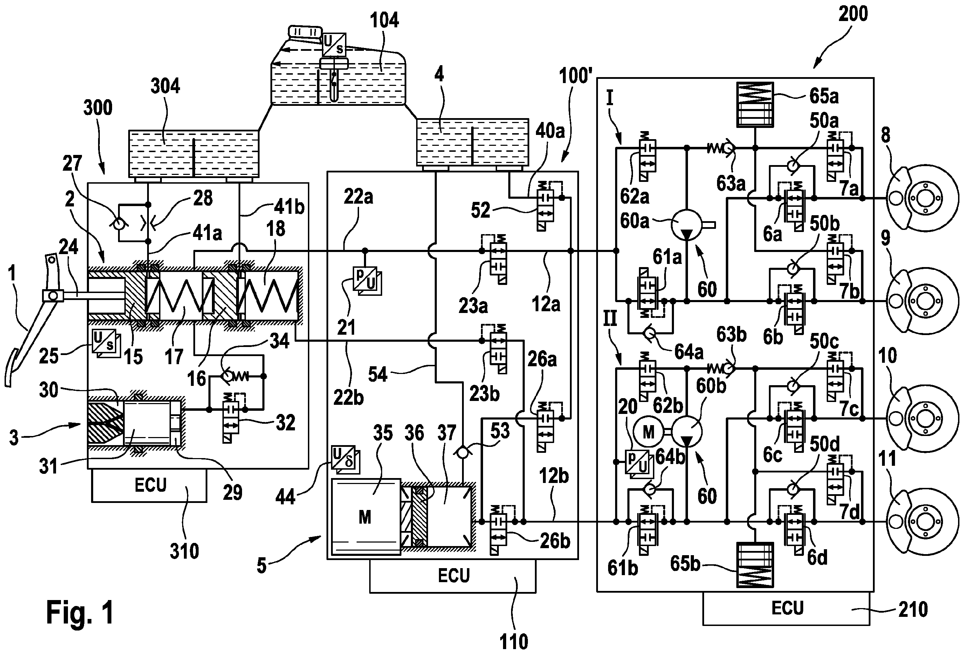

In Fig. 1 ist eine Ausführung einer Bremsanlage schematisch dargestellt, wobei diese Ausführung nicht unter Anspruch 1 fällt. Die Bremsanlage umfasst ein erstes eigenständiges Modul 100, ein zweites eigenständiges Modul 200 (Raddruckbereitstellungsvorrichtung oder Raddruckbereitstellungsmodul) und ein drittes eigenständiges Modul 300 (Pedal Actuation Unit).

Die Bremsanlage umfasst einen mittels eines Betätigungs- bzw. Bremspedals 1 betätigbaren Hauptbremszylinder 2 und eine Simulationseinrichtung 3, welche in dem dritten eigenständigen Modul 300 angeordnet sind, eine erste elektrisch steuerbare Druckbereitstellungseinrichtung 5, welche in dem ersten eigenständigen Modul 100 angeordnet ist, sowie für jede Radbremse 8-11 ein Einlassventil 6a-6d und ein Auslassventil 7a-7d und eine zweite elektrisch steuerbare Druckbereitstellungseinrichtung 60, welche in dem zweiten eigenständigen Modul 200 angeordnet sind. Ein unter Atmosphärendruck stehender Druckmittelvorratsbehälter 4 ist an dem ersten eigenständigen Modul 100 angeordnet.

Im Folgenden wird der hydraulische Schaltplan der beispielsgemäßen Bremsanlage erläutert.

Neben dem an dem ersten Modul 100 angeordneten Druckmittelvorratsbehälter 4 ist beispielsgemäß ein zweiter Druckmittelvorratsbehälter 304 vorgesehen, welcher an dem dritten Modul 300 angeordnet ist. D.h. jedem der Module 100 bzw. 300 ist beispielsgemäß ein eigener Druckmittelvorratsbehälter 4 bzw. 304 zugeordnet, welcher an dem jeweiligen Modul 100 bzw. 300 angeordnet ist.

Weiterhin ist ein Druckmittelvorratsbehälter 104 vorgesehen, der die Druckmittelvorratsbehälter 4 und 304 mit Druckmittel versorgt. Druckmittelvorratsbehälter 104 kann separat angeordnet sein.

Die Raddruckbereitstellungsvorrichtung (Modul 200) ist zweikreisig aufgebaut, wobei einem ersten Bremskreis I mit einem ersten Bremskreisdruckleitungsabschnitt 12a die (ersten) Radbremsen 8, 9 und einem zweiten Bremskreis II mit einem zweiten Bremskreisdruckleitungsabschnitt 12b die (zweiten) Radbremsen 10, 11 zugeordnet sind. Hauptbremszylinder 2 ist mit dem ersten und dem zweiten Bremskreisdruckleitungsabschnitt 12a, 12b verbunden und die erste Druckbereitstellungseinrichtung 5 ist mit dem ersten und dem zweiten Bremskreisdruckleitungsabschnitt 12a, 12b verbunden.

Hauptbremszylinder 2 weist beispielsgemäß zwei hintereinander angeordnete Kolben 15, 16 auf, die zwei hydraulische Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 304 in Verbindung, wobei die Verbindungen durch eine Relativbewegung der Kolben 15, 16 absperrbar sind. Druckraum 17 steht andererseits mittels einer hydraulischen Leitung 22a mit dem Bremskreisdruckleitungsabschnitt 12a und Druckraum 18 steht andererseits mittels einer hydraulischen Leitung 22b mit dem Bremskreisdruckleitungsabschnitt 12b in Verbindung.

Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptbremszylinder-)Kolbens 15, dessen Betätigungsweg von einem, vorzugsweise redundant ausgeführten, Wegsensor 25 erfasst wird. Dadurch ist das entsprechende Kolbenwegsignal ein Maß für den Bremspedalbetätigungswinkel. Es repräsentiert einen Bremswunsch des Fahrzeugführers.

In der Druckausgleichsleitung 41a ist eine Parallelschaltung aus einem Drosselelement 28 mit einem zum Druckmittelvorratsbehälter 304 hin schließenden Rückschlagventil 27 enthalten.

Simulationseinrichtung 3 ist beispielsgemäß als eine separate hydraulische Simulatoreinheit (in dem dritten Modul 300) ausgebildet, welche hydraulisch an den Hauptbremszylinder 2 ankoppelbar ist. Andere Ausführungen der Simulationseinrichtung oder andere Anbindungen der Simulationseinrichtung an den Hauptbremszylinder 2 sind denkbar. So könnte Simulationseinrichtung 3 auch als eine, z.B. im Hauptbremszylinder angeordnete, Simulatorfeder ausgeführt sein.

Simulationseinrichtung 3 besteht beispielsgemäß im Wesentlichen aus einer Simulatorkammer 29, einer Simulatorfederkammer 30 sowie einem die beiden Kammern 29, 30 voneinander trennenden Simulatorkolben 31. Der Simulatorkolben 31 stützt sich durch ein in der Simulatorfederkammer 30 angeordnetes elastisches Element (z.B. eine Feder), welches vorteilhafterweise vorgespannt ist, an einem Gehäuse (Ventilblock) ab. Die Simulatorkammer 29 ist mittels eines elektrisch betätigbaren Simulatorventils 32 mit dem Druckraum 17 des Hauptbremszylinders 2 verbindbar. Bei Vorgabe einer Pedalbewegung und geöffnetem Simulatorventil 32 strömt Druckmittel vom Hauptbremszylinder-Druckraum 17 in die Simulatorkammer 29. Ein hydraulisch antiparallel zum Simulatorventil 32 angeordnetes Rückschlagventil 34 ermöglicht unabhängig vom Schaltzustand des Simulatorventils 32 ein weitgehend ungehindertes Zurückströmen des Druckmittels von der Simulatorkammer 29 zum Hauptbremszylinder-Druckraum 17.

In dem Modul 300 sind die hydraulischen Komponenten Rückschlagventil 27, Drosselelement 28, welche mit dem Hauptbremszylinder 2 zusammenhängen, das mit der Simulationseinrichtung 3 zusammenhängende Simulatorventil 32 und Rückschlagventil 34 sowie der Hauptbremszylinderwegsensor 25 angeordnet. Zur Ansteuerung der elektrisch betätigbaren Komponenten des Moduls umfasst Modul 300 eine (dritte) elektronische Steuer- und Regeleinheit (ECU) 310.

Je Bremskreis I, II ist zwischen der hydraulischen Leitung 22a, 22b und dem Bremskreisdruckleitungsabschnitt 12a, 12b ein Trennventil 23a, 23b geschaltet. Die Trennventile 23a, 23b sind als elektrisch betätigbare, vorzugsweise stromlos offene, Ventile, z.B. 2/2-Wegeventile, ausgebildet. Durch die Trennventile 23a, 23b kann die hydraulische Verbindung zwischen dem Hauptbremszylinder 2 und den Bremskreisdruckleitungsabschnitten 12a, 12b abgesperrt werden.

Die elektrisch steuerbare Druckbereitstellungseinrichtung 5 ist als eine hydraulische Zylinder-Kolben-Anordnung mit einem hydraulischen Druckraum 37 gebildet, deren Kolben 36 durch einen elektromechanischen Aktuator vor und zurück verschiebbar ist. Druckbereitstellungseinrichtung 5 stellt somit einen einkreisigen elektrohydraulischen Aktuator dar, dessen Kolben 36, welcher den Druckraum 37 begrenzt, von einem schematisch angedeuteten Elektromotor 35 unter Zwischenschaltung eines ebenfalls schematisch dargestellten Rotations-Translationsgetriebes vor und zurück verschiebbar ist. Ein der Erfassung der Rotorlage des Elektromotors 35 dienender, schematisch angedeuteter Rotorlagensensor ist mit dem Bezugszeichen 44 bezeichnet.

Der Druckraum 37 ist über jeweils ein Zuschaltventil 26a, 26b mit den Bremskreisdruckleitungsabschnitten 12a, 12b (bzw. den Bremskreisen I, II) trennbar verbunden. Die Zuschaltventile 26a, 26b sind als elektrisch betätigbare, vorzugsweise stromlos geschlossene, Ventile, z.B. 2/2-Wegeventile, ausgebildet. Bei geöffneten Zuschaltventilen 26a, 26b gelangt bei einem Verschieben des Kolbens 36 in Bremsbetätigungsrichtung Druckmittel aus dem Druckraum 37 in die Bremskreisdruckleitungsabschnitte 12a, 12b, und damit in die Raddruckbereitstellungsvorrichtung, und so in die Radbremsen 8, 9, 10, 11 zu deren Betätigung.

Beispielsgemäß ist eine Nachsaugleitung 54 vorgesehen, welche den Druckraum 37 mit dem Druckmittelvorratsbehälter 4 verbindet, wobei in der Nachsaugleitung 54 ein in Richtung des Druckraums 37 öffnendes Rückschlagventil 53 angeordnet ist. Hierdurch kann Druckmittel durch Zurückfahren des Kolbens 36 (bei geschlossenen Zuschaltventilen 26a, 26b) in die erste Druckbereitstellungseinrichtung 5 nachgesaugt werden.

Zum Erfassen des Hauptbremszylinderdruckes ist ein vorzugsweise redundant ausgeführter Drucksensor 21 vorgesehen, welcher mit einem der Druckräume des Hauptbremszylinders 2 verbunden ist, beispielsgemäß mit dem Druckraum 17.

Je Bremskreis I, II sind die Ausgangsanschlüsse des Trennventils 23a bzw. 23b und des Zuschaltventils 26a bzw. 26b mit dem zugehörigen Bremskreisdruckleitungsabschnitte 12a bzw. 12b verbunden. Entsprechend ist Hauptbremszylinder 2 mit dem ersten Bremskreisdruckleitungsabschnitt 12a (über Trennventil 23a) und mit dem zweiten Bremskreisdruckleitungsabschnitt 12b (über Trennventil 23b) verbunden. Ebenso ist Druckbereitstellungseinrichtung 5 mit dem ersten Bremskreisdruckleitungsabschnitt 12a (über Zuschaltventil 26a) und mit dem zweiten Bremskreisdruckleitungsabschnitt 12b (über Zuschaltventil 26b) verbunden.

Die erste Druckbereitstellungseinrichtung 5, die Trennventile 23a, 23 und die Zuschaltventile 26a, 26b sind in dem ersten eigenständigen Modul 100 angeordnet. Ebenso sind beispielsgemäß die Nachsaugleitung 54 mit dem Rückschlagventil 53 zum Druckmittelvorratsbehälter 4 sowie der Drucksensor 21 in dem ersten eigenständigen Modul 100 angeordnet. Zur Ansteuerung der elektrisch betätigbaren Komponenten des Moduls 100 umfasst Modul 100 eine (erste) elektronische Steuer- und Regeleinheit (ECU) 110.

Der Bremskreisdruckleitungsabschnitt 12a ist über eine hydraulische Verbindung 40a mit dem Druckmittelvorratsbehälter 4 verbunden. Dabei ist in der hydraulischen Verbindung 40a ein elektrisch betätigbares, bevorzugt stromlos geschlossen ausgeführtes, Ablassventil 52 angeordnet. Das Ablassventil 52 ist in dem ersten eigenständigen Modul 100 angeordnet. Die hydraulische Verbindung 40a ist in dem ersten eigenständigen Modul 100 angeordnet.

Die Einlass- und Auslassventile 6a-6d, 7a-7d und die zweite Druckbereitstellungseinrichtung 60 sind, wie bereits erwähnt, Teil des zweiten Moduls 200 (Raddruckbereitstellungsvorrichtung). Dieses ist beispielsgemäß als ein an sich bekanntes ESC-Modul (ESC: Electronic Stability Control) ausgeführt, welches im Folgenden genauer beschrieben werden soll.

Einlass- und Auslassventile 6a-6d, 7a-7d sind paarweise über Mittenanschlüsse hydraulisch zusammengeschaltet und an die jeweilige Radbremse 8, 9, 10, 11 angeschlossen.

Die Eingangsanschlüsse der Einlassventile 6a, 6b bzw. 6c, 6d eines Bremskreises I bzw. II sind über eine sog. Modulatorvordruckleitung und ein analog regelbares, stromlos offenes Ventil 61a bzw. 61b, dem ein in Strömungsrichtung zu den Radbremsen öffnendes Rückschlagventil 64a bzw. 64b parallelgeschaltet ist, mit dem zugehörigen Bremskreisdruckleitungsabschnitt 12a bzw. 12b verbunden. Den Einlassventilen 6a-6d ist jeweils ein zu den Modulatorvordruckleitungen hin öffnendes Rückschlagventil 50a-50d parallelgeschaltet.

Die Ausgangsanschlüsse der Auslassventile 7a, 7b bzw. 7c, 7d eines Bremskreises I bzw. II sind an einen hydraulischen Niederdruckspeicher 65a, 65b (je Bremskreis) angeschlossen.

Die zweite Druckbereitstellungseinrichtung 60 umfasst zwei Pumpen 60a, 60b, welche durch einen gemeinsamen Elektromotor M angetrieben werden. Jede Pumpe 60a bzw. 60b ist einem Bremskreis I bzw. II zugeordnet. Die Druckseite der Pumpe 60a bzw. 60b ist mit der entsprechenden Modulatorvordruckleitung, und damit den Einlassventilen des entsprechenden Bremskreises, verbunden. Die Saugseite der Pumpe 60a bzw. 60b ist einerseits über ein in Richtung des Niederdruckspeichers schließendes Rückschlagventil 63a bzw. 63b mit dem entsprechenden Niederdruckspeicher 65a bzw. 65b des Bremskreises I bzw. II verbunden.

Andererseits ist die Saugseite der Pumpe 60a bzw. 60b über ein elektrisch betätigbares, vorteilhafterweise stromlos geschlossenes, Druckmittelzufuhrventile 62a bzw. 62b mit dem entsprechenden Bremskreisdruckleitungsabschnitt 12a bzw. 12b verbunden. Das für einen Druckaufbau mittels der Pumpen 60a, 60b benötigte Druckmittelvolumen kann diesen über die Druckmittelzufuhrventile 62a, 62b und die Bremskreisdruckleitungsabschnitte 12a, 12b zugeführt werden.

Zum Erfassen des im Bremskreisdruckleitungsabschnitt 12b herrschenden Druckes ist ein vorzugsweise redundant ausgeführter Drucksensor 20 vorgesehen, welche vorteilhafterweise Teil des Moduls 200 ist.

Die Einlass- und Auslassventil 6a-6d, 7a-7d, die Niederdruckspeicher 65a, 65b und die zweite Druckbereitstellungseinrichtung 60 (60a, 60b) sind in dem zweiten eigenständigen Modul 200 angeordnet, dem sogenannten Raddruckbereitstellungsmodul. Die hydraulischen Komponenten Rückschlagventile 50a-50d, 63a, 63b, 64a, 64b, Ventile 61a, 62a, 61b, 62b sowie der Drucksensor 20 sind ebenfalls in Modul 200 angeordnet. Zur Ansteuerung der elektrisch betätigbaren Komponenten des Moduls 200 umfasst Modul 200 eine (zweite) elektronische Steuer- und Regeleinheit (ECU) 210.

Die elektronischen Steuer- und Regeleinheiten 110, 210 sind vorteilhafterweise mittels einer Kommunikationseinrichtung (z.B. Datenbus) untereinander verbunden, um Daten austauschen zu können.

Innerhalb des Moduls 100 sind je Bremskreis I (bzw. II) die Ausgangsanschlüsse des Trennventils 23a (bzw. 23b) und des Zuschaltventils 26a (bzw. 26b) über den Bremskreisdruckleitungsabschnitt 12a (bzw. 12b) miteinander verbunden, was die bereits erwähnte hydraulische Verbindung der beiden Module 100 und 200 durch lediglich zwei hydraulische Strömungswege erlaubt. Dabei ist die hydraulische Verbindung zwischen den Ausgangsanschlüssen von Trenn- und Zuschaltventil 23a, 26a über die Verbindung 40a mit dem Ablassventil 52 mit dem Druckmittelvorratsbehälter 4 verbunden.

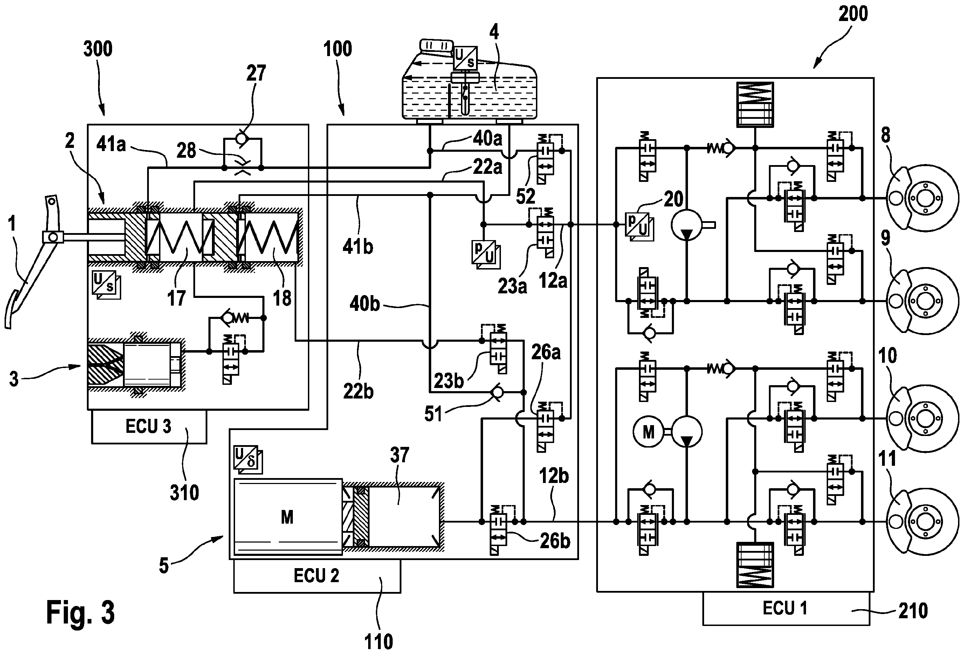

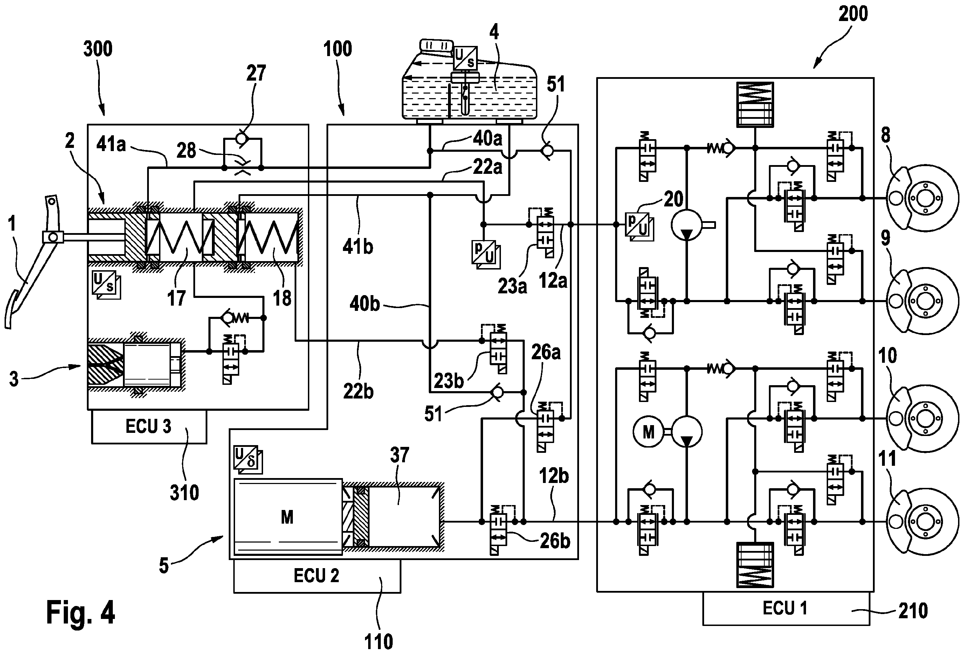

Gemäß einem anderen bevorzugten Ausführungsbeispiel, welches unter Anspruch 1 fällt, kann die Bremsanlage der Fig. 1 auch nur einen, unter Atmosphärendruck stehenden, an dem ersten eigenständigen Modul 100 angeordneten Druckmittelvorratsbehälter 4 umfassen, wie dies auch in den Fig. 3 und 4 dargestellt ist. Die Druckräume 17, 18 des Hauptbremszylinders 2 sind dann jeweils über eine Druckausgleichsleitung 41a, 41b mit dem an dem ersten eigenständigen Modul 100 angeordneten Druckmittelvorratsbehälter 4 hydraulisch verbunden (siehe Fig. 3 und 4).

Gemäß einem weiteren bevorzugten Ausführungsbeispiel der Bremsanlage der Fig. 1 ist auch der Bremskreisdruckleitungsabschnitt 12b über eine hydraulische Verbindung 40b mit dem Druckmittelvorratsbehälter 4 verbunden, wie dies auch in der Fig. 3 dargestellt ist. Dabei ist vorteilhafterweise in dieser hydraulischen Verbindung 40b des Bremskreisdruckleitungsabschnitts 12b ein in Richtung des Bremskreisdruckleitungsabschnitts 12b öffnendes Rückschlagventil 51 (siehe Fig. 3) angeordnet. Alternativ ist es auch bevorzugt, dass auch in der hydraulischen Verbindung 40b ein (zweites) elektrisch betätigbares, bevorzugt stromlos geschlossen ausgeführtes, Ablassventil (152) angeordnet ist.

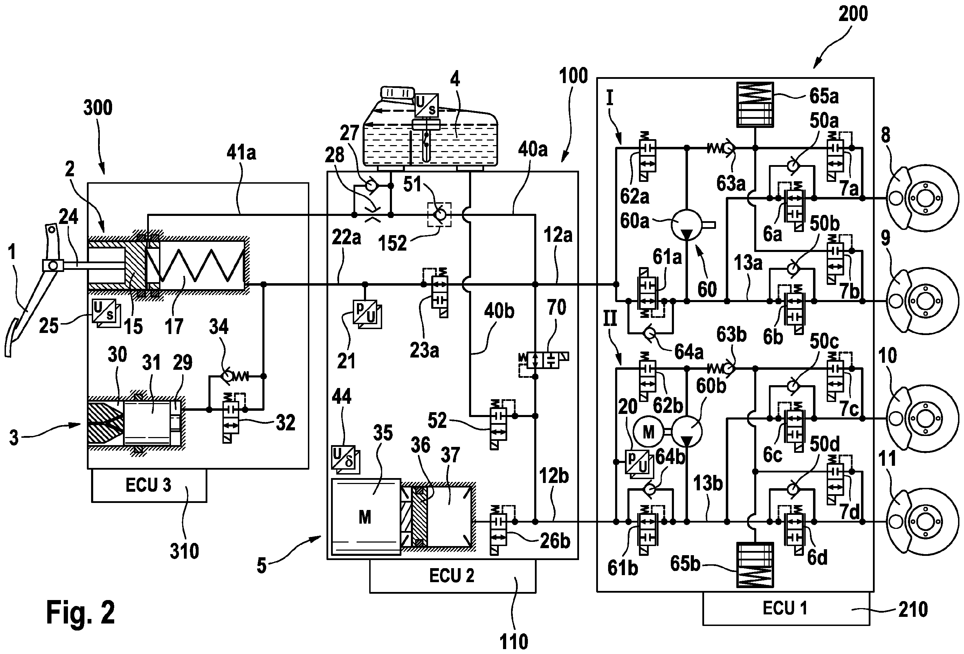

In Fig. 2 ist ein erstes Ausführungsbeispiel einer erfindungsgemäßen Bremsanlage schematisch dargestellt. Die Bremsanlage umfasst ein erstes eigenständiges Modul 100, ein zweites eigenständiges Modul 200 (Raddruckbereitstellungsvorrichtung oder Raddruckbereitstellungsmodul) und ein drittes eigenständiges Modul 300 (Pedal Actuation Unit).

Die Bremsanlage umfasst einen mittels eines Betätigungs- bzw. Bremspedals 1 betätigbaren Hauptbremszylinder 2 und eine Simulationseinrichtung 3, welche in dem dritten eigenständigen Modul 300 angeordnet sind, eine erste elektrisch steuerbare Druckbereitstellungseinrichtung 5, welche in dem ersten eigenständigen Modul 100 angeordnet ist, sowie für jede Radbremse 8-11 ein Einlassventil 6a-6d und ein Auslassventil 7a-7d und eine zweite elektrisch steuerbare Druckbereitstellungseinrichtung 60, welche in dem zweiten eigenständigen Modul 200 angeordnet sind. Ein unter Atmosphärendruck stehender Druckmittelvorratsbehälter 4 ist an dem ersten eigenständigen Modul 100 angeordnet.

Im Folgenden wird der hydraulische Schaltplan der zweiten beispielsgemäßen Bremsanlage erläutert. Es werden hauptsächlich die Unterschiede des ersten Ausführungsbeispiels gegenüber der Ausführung von Fig. 1 näher ausgeführt.

Das Modul 200 (Raddruckbereitstellungsvorrichtung) entspricht dem Modul 200 der Ausführung der Fig. 1. Zur Ansteuerung der elektrisch betätigbaren Komponenten des Moduls umfasst Modul 200 eine zweite elektronische Steuer- und Regeleinheit (ECU) 210.

Hauptbremszylinder 2 ist beispielsgemäß einkreisig ausgeführt und weist einen Kolben 15 auf, der einen hydraulischen Druckraum 17 begrenzt. Druckraum 17 steht einerseits über in dem Kolben 15 ausgebildete radiale Bohrungen sowie eine Druckausgleichsleitung 41a mit dem Druckmittelvorratsbehälter 4 in Verbindung, wobei die Verbindung durch eine Relativbewegung des Kolbens 15 absperrbar ist. Druckraum 17 steht andererseits mittels einer hydraulischen Leitung 22a mit dem Bremskreisdruckleitungsabschnitt 12a in Verbindung.

In der Druckausgleichsleitung 41a ist eine Parallelschaltung aus einem Drosselelement 28 mit einem zum Druckmittelvorratsbehälter 4 hin schließenden Rückschlagventil 27 enthalten.

Die Simulationseinrichtung 3 sowie deren Ankopplung an den Druckraum 17 des Hauptbremszylinder 2 über die Ventile 32, 34 entsprechen der Ausführung der Fig. 1.

In dem Modul 300 sind die hydraulischen Komponenten Rückschlagventil 27, Drosselelement 28, welche dem Hauptbremszylinder 2 zugeordnet sind, das der Simulationseinrichtung 3 zugeordnete Simulatorventil 32 und Rückschlagventil 34 sowie der Hauptbremszylinderwegsensor 25 angeordnet. Zur Ansteuerung der elektrisch betätigbaren Komponenten des Moduls 300 umfasst Modul 300 eine (dritte) elektronische Steuer- und Regeleinheit (ECU) 310.

Zum Erfassen des Hauptbremszylinderdruckes ist ein vorzugsweise redundant ausgeführter Drucksensor 21 vorgesehen, welcher mit dem Druckraum 17 des Hauptbremszylinders 2 verbunden ist.

Zwischen der hydraulischen Leitung 22a und dem Bremskreisdruckleitungsabschnitt 12a ist ein Trennventil 23a geschaltet, welches als elektrisch betätigbares, vorzugsweise stromlos offenes, Ventil, z.B. 2/2-Wegeventil, ausgebildet ist.

Druckbereitstellungseinrichtung 5 entspricht der Druckbereitstellungseinrichtung der Ausführung der Fig. 1. Ihr Druckraum 37 ist über ein Zuschaltventil 26b mit dem Bremskreisdruckleitungsabschnitt 12b (und damit dem Bremskreis II) trennbar hydraulisch verbunden. Zuschaltventil 26b ist als elektrisch betätigbares, vorzugsweise stromlos geschlossenes, Ventil, z.B. 2/2-Wegeventil, ausgebildet.

Bremskreisdruckleitungsabschnitt 12a und Bremskreisdruckleitungsabschnitt 12b sind über ein Achstrennventil 70 hydraulisch miteinander verbunden.

Achstrennventil 70 ist als elektrisch betätigbares, vorzugsweise stromlos offenes, Ventil, z.B. 2/2-Wegeventil, ausgebildet.

Bei geöffnetem Zuschaltventil 26b und Achstrennventil 70 gelangt bei einem Verschieben des Kolbens 36 in Bremsbetätigungsrichtung Druckmittel aus dem Druckraum 37 in die Bremskreisdruckleitungsabschnitte 12a, 12b, und damit in das Modul 200, und so in die Radbremsen 8, 9, 10, 11 zu deren Betätigung.

Somit ist Hauptbremszylinder 2 mit dem ersten Bremskreisdruckleitungsabschnitt 12a (über Trennventil 23a) und mit dem zweiten Bremskreisdruckleitungsabschnitt 12b (über Trennventil 23a und Achstrennventil 70) verbunden. Ebenso ist Druckbereitstellungseinrichtung 5 mit dem ersten Bremskreisdruckleitungsabschnitt 12a (über Zuschaltventil 26b und Achstrennventil 70) und mit dem zweiten Bremskreisdruckleitungsabschnitt 12b (über Zuschaltventil 26b) verbunden.

Beispielsgemäß ist jeder der Bremskreisdruckleitungsabschnitte 12a bzw. 12b über eine hydraulische Verbindung 40a bzw. 40b mit dem Druckmittelvorratsbehälter 4 verbunden. Dabei ist in der hydraulischen Verbindung 40b ein elektrisch betätigbares, bevorzugt stromlos geschlossen ausgeführtes, Ablassventil 52 angeordnet. In der anderen hydraulischen Verbindung 40a ist ein in Richtung des Bremskreisdruckleitungsabschnitts 12a öffnendes Rückschlagventil 51 angeordnet.

Alternativ ist es möglich, dass auch in der hydraulischen Verbindung 40a - anstelle des Rückschlagventils 51 - ein (zweites) elektrisch betätigbares, bevorzugt stromlos geschlossen ausgeführtes, Ablassventil 52 angeordnet ist. Dies ist in Fig. 2 durch die gestrichelte Linie 152 um das Rückschlagventil 51 angedeutet.

Die hydraulische Verbindung 40a bzw. 40b zwischen dem Bremskreisdruckleitungsabschnitt 12a bzw. 12b und dem Druckmittelvorratsbehälter 4 ist in dem Sinne direkt, dass die hydraulische Verbindung nicht über weitere hydraulische Komponenten wie den Hauptbremszylinder 2 oder die Druckbereitstellungseinrichtung 5 führt.

Beispielsgemäß führt die hydraulische Verbindung 40a von dem Bremskreisdruckleitungsabschnitt 12a über das Rückschlagventil 51 und die Druckausgleichsleitung 41a zum Druckmittelvorratsbehälter 4. Die hydraulische Verbindung 40b führt von dem Bremskreisdruckleitungsabschnitt 12b über das Ablassventil 52 zum Druckmittelvorratsbehälter 4.

Vorteilhafterweise ist in der hydraulischen Verbindung 40a bzw. 40b zwischen dem Bremskreisdruckleitungsabschnitt 12a bzw. 12b und dem Druckmittelvorratsbehälter 4 neben dem Rückschlagventil 51 (oder Ablassventil 152) bzw. Ablassventil 52 kein weiteres Ventil, d.h. Rückschlagventil oder elektrisch/hydraulisch/mechanisch betätigbares Schaltventil, angeordnet.

Es ist auch möglich (nicht dargestellt), dass nur einer der beiden Bremskreisdruckleitungsabschnitte 12a (oder 12b) über eine hydraulische Verbindung 40a (oder 40b) mit dem Druckmittelvorratsbehälter 4 verbunden ist, wobei in der hydraulischen Verbindung das elektrisch betätigbare, bevorzugt stromlos geschlossen ausgeführte, Ablassventil 52 (oder 152) angeordnet ist.

Die erste Druckbereitstellungseinrichtung 5, das Trennventil 23a, das Zuschaltventil 26b und das Achstrennventil 70 sind in dem ersten eigenständigen Modul 100 angeordnet. Ebenso ist beispielsgemäß der Drucksensor 21 in dem ersten eigenständigen Modul 100 angeordnet.

Das Ablassventil 52 und ggf. das Rückschlagventil 51 bzw. das Ablassventil 152 sind in dem ersten eigenständigen Modul 100 angeordnet.

Zur Ansteuerung der elektrisch betätigbaren Komponenten des Moduls 100 umfasst Modul 100 eine (erste) elektronische Steuer- und Regeleinheit (ECU) 110.

Bevorzugt ist jedem Modul 100, 200, 300 eine eigene elektronische Steuer- und Regeleinheit (ECU) 110, 210, 310 zugeordnet.

In Fig. 3 ist ein weiteres Ausführungsbeispiel einer erfindungsgemäßen Bremsanlage schematisch dargestellt. Die Bremsanlage umfasst ein erstes eigenständiges Modul 100, ein zweites eigenständiges Modul 200 und ein drittes eigenständiges Modul 300 (Pedal Actuation Unit), wobei (ausschließlich) ein unter Atmosphärendruck stehender Druckmittelvorratsbehälter 4 vorgesehen ist, welcher an dem ersten eigenständigen Modul 100 angeordnet ist.

Das Modul 200 (Raddruckbereitstellungsvorrichtung) entspricht dem Modul 200 der Ausführung der Fig. 1, lediglich der Drucksensor 20 ist an dem Bremskreisdruckleitungsabschnitt 12a (und nicht wie in Fig. 1 an 12b) angeordnet. Zur Ansteuerung der elektrisch betätigbaren Komponenten des Moduls umfasst Modul 200 eine zweite elektronische Steuer- und Regeleinheit (ECU) 210.

Wie in der Ausführung der Fig. 1 umfasst die beispielsgemäße Bremsanlage einen mittels eines Bremspedals 1 betätigbaren Hauptbremszylinder 2 mit zwei Druckräumen 17, 18 und eine mit dem Hauptbremszylinder 2 verbundene Simulationseinrichtung 3, welche in dem dritten eigenständigen Modul 300 angeordnet sind, eine erste elektrisch steuerbare Druckbereitstellungseinrichtung 5 mit Druckraum 37, welche in dem ersten eigenständigen Modul 100 angeordnet ist, sowie Radbremsen 8-11.

Die Druckräume 17 bzw. 18 sind über entsprechende Druckausgleichsleitungen 41a bzw. 41b mit dem an dem ersten eigenständigen Modul 100 angeordneten Druckmittelvorratsbehälter 4 hydraulisch verbunden, wobei die Verbindungen durch eine Relativbewegung der Kolben 15, 16 absperrbar sind. In der Druckausgleichsleitung 41a ist eine Parallelschaltung aus einem Drosselelement 28 mit einem zum Druckmittelvorratsbehälter 4 hin schließenden Rückschlagventil 27 angeordnet. Druckraum 17 steht mittels einer hydraulischen Leitung 22a über Trennventil 23a mit dem Bremskreisdruckleitungsabschnitt 12a und Druckraum 18 steht mittels einer hydraulischen Leitung 22b über Trennventil 23b mit dem Bremskreisdruckleitungsabschnitt 12b in Verbindung.

Druckraum 37 ist über jeweils ein Zuschaltventil 26a, 26b mit den Bremskreisdruckleitungsabschnitten 12a, 12b (bzw. den Bremskreisen I, II) trennbar verbunden.

Der Bremskreisdruckleitungsabschnitt 12a ist über eine hydraulische Verbindung 40a mit dem Druckmittelvorratsbehälter 4 verbunden, wobei in der hydraulischen Verbindung 40a ein elektrisch betätigbares Ablassventil 52 angeordnet ist, welches im ersten eigenständigen Modul 100 angeordnet ist.

Der Bremskreisdruckleitungsabschnitt 12b ist über eine hydraulische Verbindung 40b mit dem Druckmittelvorratsbehälter 4 verbunden, wobei in der hydraulischen Verbindung 40b ein in Richtung des Bremskreisdruckleitungsabschnitts 12b öffnendes Rückschlagventil 51 angeordnet ist. Rückschlagventil 51 ist im ersten eigenständigen Modul 100 angeordnet.

Die Druckausgleichsleitung 41a bildet beispielsgemäß stückweise einen Teil der hydraulischen Verbindung 40a, die Druckausgleichsleitung 41b bildet beispielsgemäß stückweise einen Teil der hydraulischen Verbindung 40b (d.h. jeweils gemeinsame Leitungsabschnitte im Modul 100).

Beispielsgemäß ist jedem Modul 100, 200, 300 eine eigene elektronische Steuer- und Regeleinheit (ECU) 110, 210, 310 zugeordnet.

In Fig. 4 ist ein weiteres Ausführungsbeispiel einer erfindungsgemäßen Bremsanlage schematisch dargestellt. Die Bremsanlage entspricht dem Ausführungsbeispiel der Fig. 3, wobei im Unterschied in der hydraulischen Verbindung 40a kein elektrisch betätigbares Ablassventil sondern ein in Richtung des Bremskreisdruckleitungsabschnitts 12a öffnendes Rückschlagventil 51 angeordnet ist, entsprechend wie in der hydraulischen Verbindung 40b.

Die beschriebene Anordnung der Komponenten der beispielsgemäßen Bremsanlagen in drei Modulen 100, 200, 300 bietet den Vorteil, dass nur das Modul 300, die sogenannte Pedal Actuation Unit beispielsgemäß umfassend den ein- oder zweikreisigen Hauptbremszylinder 2, den Wegsensor 25, die Simulationseinrichtung 3 und das Simulatorventil 32, an der Spritzwand untergebracht werden muss. Die Module 100 und 200 können anderswo im Fahrzeug bzw. Motorraum untergebracht werden.

Für die beschriebenen Ausführungsbeispiele ist die erste Druckbereitstellungseinrichtung 5 als eine Zylinder-Kolben-Anordnung mit einem hydraulischen Druckraum 37 ausgebildet, deren Kolben 36 durch einen elektromechanischen Aktuator 35 vorschiebbar und zurückziehbar ist. Dabei ist die Druckbereitstellungseinrichtung 5 vorteilhafterweise derart ausgeführt, dass sie maximal einen vorgegebenen Blockierdruck der Radbremsen 8-11 bereitstellen kann (ohne Fading). Dies bietet den Vorteil, dass die erforderliche Motorleistung für die erste Druckbereitstellungseinrichtung 5 erheblich reduziert werden kann. Zusätzlich ermöglicht es eine starke Verkleinerung der Zylinder-Kolben-Anordnung bzw. der Größe des hydraulischen Druckraums 37.

Das maximale Druckmittelvolumen der Druckbereitstellungseinrichtung 5 wird auf das bis zum Blockierpunkt erforderliche Druckmittelvolumen reduziert. Ist zur Bremsung ein höherer Druck (und damit auch zusätzliches Druckmittelvolumen) erforderlich, wird dies von den Pumpen 60a, 60b der zweiten Druckbereitstellungseinrichtung 60 (Modul 200) aufgebracht. Druckbereitstellungseinrichtung 60 kann dazu über das Ablassventil 52 und ggf. das Rückschlagventil 51 (oder Ablassventil 152) in Modul 100 aus dem Druckmittelvorratsbehälter 4 ansaugen oder alternativ/zusätzlich auch über das Nachsaugventil 53 der Druckbereitstellungseinrichtung 5.

Kommt es in diesem Fall (nach erfolgtem Nachsaugen von zusätzlichem Druckmittel aus dem Druckmittelvorratsbehälter 4) zu einer ABS-Regelung, kann das überschüssige Druckmittelvolumen, das nicht von der Druckbereitstellungseinrichtung 5 aufgenommen werden kann, in den Niederdruckspeichern 65a, 65b belassen werden. Bei einem vollständigen Entleeren der Niederdruckspeicher würde ansonsten der Druck im Bereich zwischen den Pumpen 60a, 60b und der Druckbereitstellungseinrichtung 5 unzulässig hoch werden. Dieses Verfahren ist jedoch relativ aufwändig, da Abschätzungen zum Druckmittelvolumen notwendig sind. Auch könnte der Druck in den teilgefüllten Niederdruckspeichern 65a, 65b zu hoch werden.

Bei den beispielsgemäßen Bremsanlagen ist es hingegen einfach möglich, den Systemdruckbereich, d.h. den Bremskreisdruckleitungsabschnitt 12a, 12b, über das oder die Ablassventile 52 (152) direkt mit dem Druckmittelvorratsbehälter 4 zu verbinden und so das überschüssige Druckmittelvolumen in diesen abzulassen.

Für die beschriebenen Ausführungsbeispiele ermöglichen es die Verbindung 40 mit dem Rückschlagventil 51 (oder alternativ mit dem weiteren Ablassventil 152) und die Verbindung 40 mit dem Ablassventil 52, dass die Druckbereitstellungseinrichtung 60 Druckmittel aus dem Druckmittelvorratsbehälter 4 ansaugen kann, ohne über den Druckraum 37 der Druckbereitstellungseinrichtung 5 oder einen Druckraum des Hauptbremszylinders 2 ansaugen zu müssen. Bei einem aktiven Druckaufbau durch das Raddruckbereitstellungsmodul 200 ermöglicht die beispielsgemäße Bremsanlage daher ein Ansaugen von Druckmittel durch die Druckbereitstellungseinrichtung 60 aus dem Druckmittelvorratsbehälter 4 mit geringem Strömungswiderstand.

Weiterhin ermöglicht die Verbindung 40a oder 40b mit dem Ablassventil 52 einen unmittelbaren Abbau von überschüssigem Druckmittel aus dem Bremskreisdruckleitungsabschnitt 12a, 12b in den Druckmittelvorratsbehälter 4, ebenso mit geringem Strömungswiderstand. Durch ein hydraulisches Verbinden der Bremskreisdruckleitungsabschnitte 12a und 12b kann auch aus beiden Bremskreisdruckleitungsabschnitten in den Druckmittelvorratsbehälter 4 abgelassen werden.

Das hydraulische Verbinden des zweiten Bremskreisdruckleitungsabschnitts 12b mit dem ersten Bremskreisdruckleitungsabschnitt 12a kann bei der Ausführung der Fig. 1 durch Öffnen der Zuschaltventile 26a, 26b erreicht werden. Bei dem ersten Ausführungsbeispiel der Fig. 2 können der zweite Bremskreisdruckleitungsabschnitt 12b und der erste Bremskreisdruckleitungsabschnitt 12a einfach über das Achstrennventil 70 verbunden werden.

Die Bremsanlage gemäß dem ersten Ausführungsbeispiel ist in der hydraulischen Rückfallebene, wenn die Radbremsen 8-11 ausschließlich durch den Fahrer über das Bremspedal 1 und den Hauptbremszylinder 2 betätigt werden können, einkreisig aufgebaut. Die Bremsanlage gemäß der Ausführung der Fig. 1 ist in der hydraulischen Rückfallebene komplett zweikreisig aufgebaut.

## Patentansprüche

1. Bremsanlage für ein Kraftfahrzeug mit
• einem bremspedalbetätigbaren Hauptbremszylinder (2),
• einer ersten elektrisch steuerbaren Druckbereitstellungseinrichtung (5),
• einem unter Atmosphärendruck stehenden Druckmittelvorratsbehälter (4),
• einem ersten Bremskreis (I) mit einem ersten Bremskreisdruckleitungsabschnitt (12a) zur Verbindung mit ersten Radbremsen (8, 9) und einem zweiten Bremskreis (II) mit einem zweiten Bremskreisdruckleitungsabschnitt (12b) zur Verbindung mit zweiten Radbremsen (10, 11), wobei der Hauptbremszylinder (2) mit dem ersten und dem zweiten Bremskreisdruckleitungsabschnitt (12a, 12b) verbunden ist und die erste Druckbereitstellungseinrichtung (5) mit dem ersten und dem zweiten Bremskreisdruckleitungsabschnitt (12a, 12b) verbunden ist,
• einem Einlass- (6a-6d) und einem Auslassventil (7a-7d) je erster und zweiter Radbremse (8, 9, 10, 11),
• einem Niederdruckspeicher (65a, 65b) je Bremskreis (I, II), welcher mit den Ausgangsanschlüssen der dem Bremskreis zugeordneten Auslassventile verbunden ist,
• einer zweiten elektrisch steuerbaren Druckbereitstellungseinrichtung (60) mit einer Pumpe (60a, 60b) je Bremskreis (I, II), deren Saugseite mit dem Bremskreisdruckleitungsabschnitt sowie dem Niederdruckspeicher des Bremskreises und deren Druckseite mit den Einlassventilen der dem Bremskreis zugeordneten Radbremsen verbunden ist,
• wobei die Eingangsanschlüsse der Einlassventile (6a, 6b) der ersten Radbremsen (8, 9) mit dem ersten Bremskreisdruckleitungsabschnitt (12a) verbunden sind und die Eingangsanschlüsse der Einlassventile (6c, 6d) der zweiten Radbremsen (10, 11) mit dem zweiten Bremskreisdruckleitungsabschnitt (12b) verbunden sind,
wobei die Einlass- und Auslassventile (6a-6d, 7a-7d), die Niederdruckspeicher (65a, 65b) und die zweite Druckbereitstellungseinrichtung (60) in einem zweiten eigenständigen Modul (200) angeordnet sind,
wobei die erste elektrisch steuerbare Druckbereitstellungseinrichtung (5) in einem ersten eigenständigen Modul (100) angeordnet ist und dass der Hauptbremszylinder (2) und eine Simulationseinrichtung (3) in einem dritten eigenständigen Modul (300) angeordnet sind, wobei der Druckmittelvorratsbehälter (4) an dem ersten Modul (100) angeordnet ist, **dadurch gekennzeichnet, dass** an dem dritten Modul (300) kein Druckmittelvorratsbehälter angeordnet ist.

2. Bremsanlage nach Anspruch 1, **dadurch gekennzeichnet, dass** die Bremsanlage neben dem Druckmittelvorratsbehälter (4) an dem ersten Modul (100) keinen weiteren Druckmittelvorratsbehälter umfasst.

3. Bremsanlage nach Anspruch 1 oder 2, **dadurch gekennzeichnet, dass** eine hydraulische Leitung (41a) von dem dritten Modul (300) zu dem Druckmittelvorratsbehälter (4) an dem ersten Modul (100) vorgesehen ist.

4. Bremsanlage nach einem der Ansprüche 1 bis 3, **dadurch gekennzeichnet, dass** für zumindest einen der Bremskreisdruckleitungsabschnitte (12a, 12b) eine hydraulische Verbindung (40a, 40b) zwischen dem Bremskreisdruckleitungsabschnitt und dem Druckmittelvorratsbehälter (4) vorgesehen ist, in welcher ein elektrisch betätigbares Ablassventil (52) angeordnet ist, wobei das Ablassventil (52) in dem ersten eigenständigen Modul (100) angeordnet ist.

5. Bremsanlage nach Anspruch 4, **dadurch gekennzeichnet, dass** in der hydraulischen Verbindung (40a, 40b) zwischen dem Bremskreisdruckleitungsabschnitt (12a, 12b) und dem Druckmittelvorratsbehälter (4) neben dem Ablassventil (52) kein weiteres Ventil angeordnet ist.

6. Bremsanlage nach Anspruch 4 oder 5, **dadurch gekennzeichnet, dass** das Ablassventil (52) stromlos geschlossen ausgeführt ist.

7. Bremsanlage nach einem der Ansprüche 4 bis 6, **dadurch gekennzeichnet, dass** für den anderen Bremskreisdruckleitungsabschnitt (12a) eine zweite hydraulische Verbindung (40a) zwischen diesem Bremskreisdruckleitungsabschnitt und dem Druckmittelvorratsbehälter (4) vorgesehen ist, in welcher ein in Richtung dieses Bremskreisdruckleitungsabschnitts öffnendes Rückschlagventil (51) angeordnet ist.

8. Bremsanlage nach einem der Ansprüche 4 bis 6, **dadurch gekennzeichnet, dass** für den anderen Bremskreisdruckleitungsabschnitt (12a) eine zweite hydraulische Verbindung (40a) zwischen diesem Bremskreisdruckleitungsabschnitt und dem Druckmittelvorratsbehälter (104) vorgesehen ist, in welcher ein zweites elektrisch betätigbares Ablassventil (152) angeordnet ist.

9. Bremsanlage nach einem der Ansprüche 1 bis 8, **dadurch gekennzeichnet, dass** die erste Druckbereitstellungseinrichtung (5) über ein erstes elektrisch betätigbares Zuschaltventil (26a) mit dem ersten Bremskreisdruckleitungsabschnitt (12a) und über ein zweites elektrisch betätigbares Zuschaltventil (26b) mit dem zweiten Bremskreisdruckleitungsabschnitt (12b) verbunden ist, und dass der Hauptbremszylinder (2) über ein erstes elektrisch betätigbares Trennventil (23a) mit dem ersten Bremskreisdruckleitungsabschnitt (12a) und über ein zweites elektrisch betätigbares Trennventil (23b) mit dem zweiten Bremskreisdruckleitungsabschnitt (12b) verbunden ist.

10. Bremsanlage nach einem der Ansprüche 1 bis 8, **dadurch gekennzeichnet, dass** die erste Druckbereitstellungseinrichtung (5) über ein elektrisch betätigbares Zuschaltventil (26b) mit dem zweiten Bremskreisdruckleitungsabschnitt (12b) verbunden ist, dass der Hauptbremszylinder (2) über ein elektrisch betätigbares Trennventil (23a) mit dem ersten Bremskreisdruckleitungsabschnitt (12a) verbunden ist, und dass der erste Bremskreisdruckleitungsabschnitt (12a) über ein elektrisch betätigbares Achstrennventil (70) mit dem zweiten Bremskreisdruckleitungsabschnitt (12b) verbunden ist.

## Claims

1. Brake system for a motor vehicle, having
• a master brake cylinder (2) which is able to be actuated by means of a brake pedal,
• a first electrically controllable pressure-provision device (5),
• a pressure-medium reservoir (4) which is at atmospheric pressure,
• a first brake circuit (I) with a first brake-circuit-pressure-line section (12a) for connection to first wheel brakes (8, 9) and a second brake circuit (II) with a second brake-circuit-pressure-line section (12b) for connection to second wheel brakes (10, 11), wherein the master brake cylinder (2) is connected to the first and the second brake-circuit-pressure-line section (12a, 12b) and the first pressure-provision device (5) is connected to the first and the second brake-circuit-pressure-line section (12a, 12b),
• an inlet valve (6a-6d) and an outlet valve (7a-7d) for each first and second wheel brake (8, 9, 10, 11),
• a low-pressure accumulator (65a, 65b) for each brake circuit (I, II), which is connected to the output connections of the outlet valves assigned to the brake circuit,
• a second electrically controllable pressure-provision device (60) with a pump (60a, 60b) for each brake circuit (I, II), the suction side of which is connected to the brake-circuit-pressure-line section and the low-pressure accumulator of the brake circuit and the pressure side of which is connected to the inlet valves of the wheel brakes assigned to the brake circuit,
• wherein the input connections of the inlet valves (6a, 6b) of the first wheel brakes (8, 9) are connected to the first brake-circuit-pressure-line section (12a) and the input connections of the inlet valves (6c, 6d) of the second wheel brakes (10, 11) are connected to the second brake-circuit-pressure-line section (12b), wherein the inlet valves and outlet valves (6a-6d, 7a-7d), the low-pressure accumulators (65a, 65b) and the second pressure-provision device (60) are arranged in a second independent module (200),
wherein the first electrically controllable pressure-provision device (5) is arranged in a first independent module (100) and the master brake cylinder (2) and a simulation device (3) are arranged in a third independent module (300), wherein the pressure-medium reservoir (4) is arranged on the first module (100), **characterized in that** no pressure-medium reservoir is arranged on the third module (300).

2. Brake system according to Claim 1, **characterized in that**, besides the pressure-medium reservoir (4) on the first module (100), the brake system comprises no further pressure-medium reservoirs.

3. Brake system according to Claim 1 or 2, **characterized in that** provision is made of a hydraulic line (41a) from the third module (300) to the pressure-medium reservoir (4) on the first module (100).

4. Brake system according to one of Claims 1 to 3, **characterized in that**, for at least one of the brake-circuit-pressure-line sections (12a, 12b), provision is made of a hydraulic connection (40a, 40b) between the brake-circuit-pressure-line section and the pressure-medium reservoir (4) in which an electrically actuatable discharge valve (52) is arranged, wherein the discharge valve (52) is arranged in the first independent module (100).

5. Brake system according to Claim 4, **characterized in that**, besides the discharge valve (52), no further valve is arranged in the hydraulic connection (40a, 40b) between the brake-circuit-pressure-line section (12a, 12b) and the pressure-medium reservoir (4).

6. Brake system according to Claim 4 or 5, **characterized in that** the discharge valve (52) is designed to be normally closed.

7. Brake system according to one of Claims 4 to 6, **characterized in that**, for the other brake-circuit-pressure-line section (12a), provision is made of a second hydraulic connection (40a) between this brake-circuit-pressure-line section and the pressure-medium reservoir (4) in which a check valve (51) which opens in the direction of said brake-circuit-pressure-line section is arranged.

8. Brake system according to one of Claims 4 to 6, **characterized in that**, for the other brake-circuit-pressure-line section (12a), provision is made of a second hydraulic connection (40a) between this brake-circuit-pressure-line section and the pressure-medium reservoir (104) in which a second electrically actuatable discharge valve (152) is arranged.

9. Brake system according to one of Claims 1 to 8, **characterized in that** the first pressure-provision device (5) is connected via a first electrically actuatable sequence valve (26a) to the first brake-circuit-pressure-line section (12a) and via a second electrically actuatable sequence valve (26b) to the second brake-circuit-pressure-line section (12b), and **in that** the master brake cylinder (2) is connected via a first electrically actuatable separation valve (23a) to the first brake-circuit-pressure-line section (12a) and via a second electrically actuatable separation valve (23b) to the second brake-circuit-pressure-line section (12b).

10. Brake system according to one of Claims 1 to 8, **characterized in that** the first pressure-provision device (5) is connected via an electrically actuatable sequence valve (26b) to the second brake-circuit-pressure-line section (12b), **in that** the master brake cylinder (2) is connected via an electrically actuatable separation valve (23a) to the first brake-circuit-pressure-line section (12a), and **in that** the first brake-circuit-pressure-line section (12a) is connected via an electrically actuatable axle separation valve (70) to the second brake-circuit-pressure-line section (12b).

## Revendications

1. Système de freinage pour un véhicule automobile avec
• un maître-cylindre de frein (2) actionnable par la pédale de frein,
• un premier dispositif de fourniture de pression (5) commandable électriquement,
• un réservoir de fluide sous pression (4) à la pression atmosphérique,
• un premier circuit de freinage (I) ayant une première section de conduite de pression de circuit de freinage (12a) destinée à être reliée à des premiers freins de roue (8, 9) et un deuxième circuit de freinage (II) ayant une deuxième section de conduite de pression de circuit de freinage (12b) destinée à être reliée à des deuxièmes freins de roue (10, 11), le maître-cylindre de frein (2) étant relié à la première et à la deuxième section de conduite de pression de circuit de freinage (12a, 12b) et le premier dispositif de fourniture de pression (5) étant relié à la première et à la deuxième section de conduite de pression de circuit de freinage (12a, 12b),
• une soupape d'admission (6a-6d) et une soupape d'échappement (7a-7d) pour chaque premier et deuxième frein de roue (8, 9, 10, 11),
• un accumulateur basse pression (65a, 65b) par circuit de freinage (I, II), qui est relié aux raccords de sortie des soupapes d'échappement associées au circuit de freinage,
• un deuxième dispositif de fourniture de pression (60) commandable électriquement avec une pompe (60a, 60b) par circuit de freinage (I, II), dont le côté aspiration est relié à la section de conduite de pression de circuit de freinage ainsi qu'à l'accumulateur basse pression du circuit de freinage et dont le côté refoulement est relié aux soupapes d'admission des freins de roue associés au circuit de freinage,
• les raccords d'entrée des soupapes d'admission (6a, 6b) des premiers freins de roue (8, 9) étant reliés à la première section de conduite de pression de circuit de freinage (12a) et les raccords d'entrée des soupapes d'admission (6c, 6d) des deuxièmes freins de roue (10, 11) étant reliés à la deuxième section de conduite de pression de circuit de freinage (12b),
les soupapes d'admission et d'échappement (6a-6d, 7a-7d), les accumulateurs basse pression (65a, 65b) et le deuxième dispositif de fourniture de pression (60) étant agencés dans un deuxième module autonome (200),
le premier dispositif de fourniture de pression (5) commandable électriquement étant agencé dans un premier module autonome (100) et le maître-cylindre de frein (2) et un dispositif de simulation (3) étant agencés dans un troisième module autonome (300), le réservoir de fluide sous pression (4) étant agencé sur le premier module (100), **caractérisé en ce qu'**aucun réservoir de fluide sous pression n'est agencé sur le troisième module (300).

2. Système de freinage selon la revendication 1, **caractérisé en ce que** le système de freinage ne comprend pas d'autre réservoir de fluide sous pression en plus du réservoir de fluide sous pression (4) sur le premier module (100).

3. Système de freinage selon la revendication 1 ou 2, **caractérisé en ce qu'**une conduite hydraulique (41a) est prévue depuis le troisième module (300) jusqu'au réservoir de fluide sous pression (4) sur le premier module (100).

4. Système de freinage selon l'une quelconque des revendications 1 à 3, **caractérisé en ce que**, pour au moins l'une des sections de conduite de pression de circuit de freinage (12a, 12b), il est prévu une liaison hydraulique (40a, 40b) entre la section de conduite de pression de circuit de freinage et le réservoir de fluide sous pression (4), dans laquelle est agencée une soupape d'évacuation (52) actionnable électriquement, la soupape d'évacuation (52) étant agencée dans le premier module autonome (100).

5. Système de freinage selon la revendication 4, **caractérisé en ce qu'**aucune autre soupape n'est agencée dans la liaison hydraulique (40a, 40b) entre la section de conduite de pression de circuit de freinage (12a, 12b) et le réservoir de fluide sous pression (4), en plus de la soupape d'évacuation (52).

6. Système de freinage selon la revendication 4 ou 5, **caractérisé en ce que** la soupape d'évacuation (52) est réalisée fermée sans courant.

7. Système de freinage selon l'une quelconque des revendications 4 à 6, **caractérisé en ce que**, pour l'autre section de conduite de pression de circuit de freinage (12a), il est prévu une deuxième liaison hydraulique (40a) entre cette section de conduite de pression de circuit de freinage et le réservoir de fluide sous pression (4), dans laquelle est agencé un clapet anti-retour (51) s'ouvrant en direction de cette section de conduite de pression de circuit de freinage.

8. Système de freinage selon l'une quelconque des revendications 4 à 6, **caractérisé en ce que**, pour l'autre section de conduite de pression de circuit de freinage (12a), il est prévu une deuxième liaison hydraulique (40a) entre cette section de conduite de pression de circuit de freinage et le réservoir de fluide sous pression (104), dans laquelle est agencée une deuxième soupape d'évacuation (152) actionnable électriquement.

9. Système de freinage selon l'une quelconque des revendications 1 à 8, **caractérisé en ce que** le premier dispositif de fourniture de pression (5) est relié à la première section de conduite de pression de circuit de freinage (12a) par l'intermédiaire d'une première soupape de séquence (26a) actionnable électriquement et à la deuxième section de conduite de pression de circuit de freinage (12b) par l'intermédiaire d'une deuxième soupape de séquence (26b) actionnable électriquement, et **en ce que** le maître-cylindre de frein (2) est relié à la première section de conduite de pression de circuit de freinage (12a) par l'intermédiaire d'une première soupape de séparation (23a) actionnable électriquement et à la deuxième section de conduite de pression de circuit de freinage (12b) par l'intermédiaire d'une deuxième soupape de séparation (23b) actionnable électriquement.

10. Système de freinage selon l'une quelconque des revendications 1 à 8, **caractérisé en ce que** le premier dispositif de fourniture de pression (5) est relié à la deuxième section de conduite de pression de circuit de freinage (12b) par l'intermédiaire d'une soupape de séquence (26b) actionnable électriquement, **en ce que** le maître-cylindre de frein (2) est relié à la première section de conduite de pression de circuit de freinage (12a) par l'intermédiaire d'une soupape de séparation (23a) actionnable électriquement, et **en ce que** la première section de conduite de pression de circuit de freinage (12a) est reliée à la deuxième section de conduite de pression de circuit de freinage (12b) par l'intermédiaire d'une soupape de séparation d'essieu (70) actionnable électriquement.
